# EUROPÄISCHE PATENTSCHRIFT

(11) **EP 3 092 168 B1**
(45) Veröffentlichungstag und Bekanntmachung des Hinweises auf die Patenterteilung: **09.01.2019**
(21) Anmeldenummer: 14798896.8
(22) Anmeldetag: 17.11.2014
(51) Int. Cl.: B62M 3/00, B62M 6/50

(54) **ANTRIEBSSYSTEM FÜR EIN PEDALBETREIBBARES FAHRZEUG UND VERFAHREN ZUR ERFASSUNG DES ZUSTANDS EINES PEDALANTRIEBS**
DRIVE SYSTEM FOR A PEDAL-OPERATED VEHICLE AND METHOD FOR SENSING THE STATE OF A PEDAL DRIVE
SYSTÈME DE PROPULSION POUR VÉHICULE POUVANT ÊTRE MÛ PAR DES PÉDALES ET PROCÉDÉ DE DÉTECTION DE L'ÉTAT D'UN MÉCANISME PROPULSEUR À PÉDALES

(30) Priorität: 09.01.2014 DE 102014200173
(43) Veröffentlichungstag der Anmeldung: 16.11.2016
(73) Patentinhaber: Robert Bosch GmbH, 70442 Stuttgart (DE)
(72) Erfinder: KIMMICH, Peter, 71144 Steinenbronn (DE); SCHOCK, Wolfram, 72770 Ohmenhausen (DE)
(86) Internationale Anmeldenummer: PCT/EP2014/074744
(87) Internationale Veröffentlichungsnummer: WO 2015/104081

(56) Entgegenhaltungen:
- EP-A1- 0 935 128
- EP-A1- 2 578 484
- WO-A1-2013/041900
- DE-A1-102012 110 617
- DE-C1- 19 617 959
- DE-U1- 29 721 371
- JP-A- H09 290 795

## Beschreibung

### Stand der Technik

Die vorliegende Erfindung betrifft ein Antriebssystem für ein pedalbetreibbares Fahrzeug, insbesondere ein Elektrofahrrad, mit einem Antriebsmotor, mit dem eine Antriebskraft für das Fahrzeug erzeugbar ist, Pedalen an Kurbeln, eine Tretwelle, an der die Kurbeln befestigt sind, und einer Antriebsmechanik zur Übertragung von Antriebsenergie von der Tretwelle zu einem Rad des Fahrzeugs, beansprucht im Anspruch 1. Weiter betrifft die Erfindung ein Verfahren zur Erfassung eines Antriebszustands eines Pedalantriebs eines pedalbetreibbaren Fahrzeugs mit einem elektrischen Antriebssystem, beansprucht im Anspruch 7.

Es sind Elektrofahrräder bekannt, die mit einem elektrischen Antriebsmotor in dem bekannten, vorteilhaften Mittelmotorkonzept ausgestattet sind. Dies bietet beispielsweise eine ausgewogene Gewichtsverteilung sowie weitere Vorteile. Solche Elektrofahrräder können sowohl mit Muskelkraft, als auch mit zusätzlicher elektrischer Antriebsenergie betrieben werden. Da der muskelkraftbetätigte Pedalantrieb in typischen Fahrzeugen nicht permanent benötigt wird, stellt der Fahrer eines solchen Elektrofahrrads das Treten beispielsweise beim Ausrollen oder Bergabfahren ein. Es können Situationen auftreten, in denen der Fahrer außerdem seine Füße von den Pedalen nimmt. Dann ist es nachteilig, wenn sich die Pedale an den Kurbeln durch die Bewegung des Fahrrades induziert drehen, was als Nachlaufen bezeichnet wird. In einigen Varianten von Elektrofahrrädern sind die Kurbeln mechanisch mit dem Antriebsmotor gekoppelt oder koppelbar, sodass bei Erzeugung einer Antriebskraft aus dem Antriebsmotor die Pedale an den Kurbeln mitrotieren, was als Selbstlaufen bezeichnet wird. Um diese Zustände zu verhindern sind Elektrofahrräder bekannt, deren Tretlager mit Geschwindigkeitssensoren und Drehmomentsensoren oder einer Kombination aus beiden ausgestattet sind. Bei einem Elektrofahrrad mit einem Radnabenmotor kann die Spannung der Kette des Pedalantriebs gemessen werden. Mit solchen Sensoren kann ein Fahrerwunsch detektiert werden. In der genannten Situation kann dieser beispielsweise sein, ein Nachlaufen oder Selbstlaufen der Pedale zu verhindern. Weiter existieren Verfahren, gemäß denen ein Fahrerwunsch basierend auf einem Modell aus Signalen einer Beschleunigungssensorik, einer Drehwinkelsensorik und einer Fahrgeschwindigkeitssensorik ermittelt wird.

Gemäß der FR 2 768 991 ist ein Elektrofahrrad bekannt, das beim Schieben eine elektrische Antriebskraft erzeugt, wenn erfasst wird, dass eine Schiebekraft auf den Rahmen des Fahrrades ausgeübt wird. In der JP 1159 557 wird ein Elektrofahrrad vorgeschlagen, bei dem der Zustand, dass dieses geschoben wird, daran erkannt werden kann, dass Schiebekräfte an einem Handgriff am Lenker erfasst werden, an dem das Fahrrad geschoben wird. Das Schieben wird durch Kraft aus dem Elektromotor des Elektrofahrrads unterstützt, die aus den erfassten Schiebekräften abgeleitet wird. Die JP 11 049 078 schlägt ein Elektrofahrrad vor, bei dem der Zustand des Schiebens des Fahrrades anhand von drei verschiedenen Bedingungen erfasst und im Falle der Erkennung eines Zustands des Schiebens das Schieben mit elektrische Antriebskraft unterstützt wird. Die JP 04 358 988 offenbart ein Elektrofahrrad mit einer Erkennung des Schiebezustands anhand von drei Bedingungen, nämlich kein durch Muskelkraft indiziertes Drehmoment, eine bestimmte Geschwindigkeit des Fahrrads, und die Betätigung eines Schalters an einem Handgriff. Die JP 10 324 290 offenbart ein Elektrofahrrad, das ein einen Schalter aufweist, der von einem Schieben den Fahrer betätigt werden kann, um einen Elektroantrieb zuzuschalten. Der der Schalter kann am hinteren Ende des Sattels angeordnet sein.

Die DE-C1-196 17 959 wird als nächstliegender stand der Technik angesehen und offenbart die Merkmale des Oberbegriffs des Anspruchs 1.

Aus dem Stand der Technik ist nicht bekannt, das Nachlaufen oder Selbstlaufen der Pedale zu verhindern, auch im Fahrbetrieb eines Elektrofahrrads durch Erfassung eines Fahrerwunsches mittels einer Sensorik. Die im Stand der Technik bekannten Verfahren wären dafür auch nicht geeignet, da sie von der Entscheidung, ob eine zusätzliche elektrische Antriebskraft erzeugt werden soll, von Schiebekräften oder von einem Schalter abhängig gemacht werden, der beim Schieben gedrückt werden soll.

### Offenbarung der Erfindung

Bei dem erfindungsgemäßen Antriebssystem wird Antriebsenergie über einen Übertragungspfad von einem Pedal über eine Kurbel zu einer Tretwelle und von dort zu einem mit der Tretwelle umlaufenden Antriebsrad übertragen. In diesem Antriebsstrang ist erfindungsgemäß ein Spiel vorhanden. Das Antriebssystem umfasst außerdem eine Rückstelleinrichtung, die dazu eingerichtet ist, die zueinander spielbehafteten Teil in eine Ruhestellung zu bringen, wenn keine oder geringe Antriebskräfte, die unterhalb einer Ruhepedalkraft liegen, übertragen werden. Die Ruhestellung ist eine vorgegebene Stellung, in der die spielbehafteten Teile zueinander innerhalb von deren Spiel zueinander stehen. Oberhalb der Ruhepedalkraft sind die spielbehafteten Teile innerhalb von deren Spiel zueinander aus der Ruhestellung bringbar. Diesem Vorgang wirkt die Rückstelleinrichtung mit einer Rückstellkraft bzw. einem Rückstellmoment entgegen. Erfindungsgemäß stellt die Antriebseinrichtung eine Information darüber bereit, ob die spielbehafteten Teile in Ruhestellung sind. Diese ist vorzugsweise in Form eines oder mehrerer elektrische Signale bereitstellbar. In einem Ausführungsbeispiel kann die Information durch Inbeziehungsetzen von Informationen aus mehreren elektrischen Signalen gewonnen werden. Der Antriebsmotor ist besonders bevorzugt ein Elektromotor. Die Ruhepedalkraft kann wenigstens näherungsweise Null sein. Das Spiel zwischen den spielbehafteten Teilen ist insbesondere ein Winkel- bzw. Rotationsspiel, insbesondere zwischen der Tretwelle und dem Antriebsrad. Es ist in einer Variante auch denkbar, das Spiel zwischen der Tretwelle und einer oder beiden Kurbeln vorzusehen oder dergleichen. Das Antriebsrad ist typischerweise Teil der Antriebsmechanik und kann etwa ein Kettenrad, ein Riemenrad für einen Zahnriemen, ein Kegelrad für einen Kardanantrieb oder dergleichen sein. Die Rückstelleinrichtung umfasst vorzugsweise eine Federeinrichtung, die insbesondere als Federelement ausgebildet sein kann, welche bei Auslenkung aus der Ruhestellung eine Rückstellkraft bzw. ein Rückstellmoment erzeugt. Vorzugsweise ist die Rückstellkraft bzw. das Rückstellmoment proportional zu einem pedalinduzierten Antriebsmoment oder zu einer Pedalkraft. Besonders bevorzugt wird die Ruhestellung auch dann erkannt, wenn sich die Tretwelle dreht. Typischerweise heben sich Gewichte der beiden Kurbeln mit ihren Pedalen auf, so dass sie keine oder nur geringen Einfluss auf pedalkraftinduzierte Antriebsmomente haben, wenn der Fahrer die Füße von den Pedalen nimmt. Solange sich die Pedale mit gleichmäßiger Geschwindigkeit drehen, ist das Massenträgheitsmoment nicht relevant. Um mögliche Änderungen der Pedaldrehzahl tolerieren zu können, kann die Ruhepedalkraft auf einen Wert größer als Null gesetzt werden. Die Information, dass sich der Pedalantrieb in Ruhestellung befindet, kann genutzt werden, um den Antriebsmotor abzuschalten um Nachlaufen und/oder Selbstlaufen zu verhindern.

Die Unteransprüche zeigen bevorzugte Weiterbildungen der Erfindung.

Erfindungsgemäss kann beim Aufbringen einer Anschlagpedalkraft oder eines pedalinduzierten Anschlagmoments das Spiel soweit überwunden werden, dass sich die spielbehafteten Teile an jeweiligen Anschlagbereichen berühren. Das Spiel ist in dieser Position außer Kraft gesetzt, solange die Anschlagpedalkraft bzw. das pedalinduzierten Anschlagmoment aufgebracht wird. Die Übertragung von Antriebsenergie erfolgt über Anschlagbereiche an jedem der beiden spielbehafteten Teile. Die Anschlagbereiche der spielbehafteten Teile berühren sich in der Anschlagstellung und bilden an der oder den Kontaktstellen mindestens einen gemeinsamen Anschlagbereich. Gemäß der Erfindung wird eine Information darüber, ob sich die spielbehafteten Teile in der Anschlagstellung befinden, in Form von einem oder mehreren elektrischen Signalen bereitgestellt.

Die Information kann auf mehrere elektrische Signale verteilt sein, wobei die Information durch Inverbindungbringen von mehreren, insbesondere zwei, elektrischen Signalen extrahiert und bereitgestellt werden kann. Die Information wird erfindungsgemäss genutzt, um zu bewirken, dass bei Vorliegen der Anschlagstellung der Antriebsmotor Antriebsenergie zur Verfügung stellt. Die pedalinduzierte Leistung wird dann von elektrischer Leistung unterstützt.

Auch erfindungsgemäss wird bewirkt, dass der Antriebsmotor keine Antriebsenergie abgibt, wenn die spielbehafteten Teile in Ruhestellung sind. Das Verfahren zur Erkennung der Ruhestellung kann erfordern, dass sich die Tretwelle um einen gewissen Winkel gedreht hat, bevor die Ruhestellung erkannt werden kann. Dieser Bereich soll eine halbe Umdrehung der Tretwelle nicht überschreiten. Insbesondere gibt der Antriebsmotor spätestens dann keine Antriebsenergie mehr ab, wenn nach Eintreten der Ruhestellung die Tretwelle um eine halbe Umdrehung weitergedreht ist. Selbstlaufen und möglichst auch Nachlaufen der Pedale soll durch das Abschalten der Antriebsenergie verhindert werden.

In einer weiteren Ausführungsform des Antriebssystems ist die Erkennung der Ruhestellung, der Anschlagstellung oder einer Zwischenstellung zu zwischen den beiden vorgenannten Stellungen möglich, während die Tretwelle sich dreht. Dazu ist eine Erfassungseinrichtung vorgesehen, die nicht mit der Tretwelle umläuft, sondern zum Beispiel rahmenfest angeordnet ist. Die Erfassungseinrichtung erfasst einen Durchlaufzeitpunkt oder einen Durchlaufwinkel von wenigstens zwei Durchlaufgebereinrichtungen, die jeweils mit einem der spielbehafteten Teile umlaufen. Ein aus den Durchlaufzeitpunkten oder Durchlaufwinkeln erfasster zeitlicher Abstand oder ein erfasster Winkelabstand zwischen den beiden Durchlaufgebereinrichtungen entspricht einer Relativstellung der spielbehafteten Teile zueinander. Bei der Erfassung des zeitlichen Abstands der Durchlaufzeiten ist der Zusammenhang zwischen der Relativstellung der spielbehafteten Teile und dem Zeitabstand der Durchläufe auch davon abhängig, mit welcher Drehzahl die Tretwelle umläuft. Vorzugsweise wird daher auch die Drehzahl der Tretwelle gemessen, beispielsweise, indem mittels der durch Durchlaufgebereinrichtung festgestellt wird, wann dieselbe Durchlaufgebereinrichtung wieder an der Erfassungseinrichtung vorbeiläuft. Es ist auch denkbar die Drehzahl zu erfassen, indem der Durchlauf von mehreren Durchlaufgebereinrichtungen an einem der beiden spielbehafteten Teile, die einen bekannten Winkelabstand zueinander aufweisen, zu erfassen und aus dem zeitlichen Abstand von deren Durchläufen die Drehzahlinformation verfügbar zu machen. Auf diese Weise kann die Drehzahl innerhalb eines Bruchteils einer ganzen Umdrehung der Tretwelle erfasst werden. Somit ist eine schnellere Bestimmung der Relativstellung der spielbehafteten Teile zueinander und entsprechend eine schnellere Reaktion darauf möglich. Unter einem Durchlauf wird das vorbeikommen einer Durchlaufgebereinrichtung an der Erfassungseinrichtung verstanden. Der erfasste Zeitabstand zwischen einem Durchlauf einer Durchlaufgebereinrichtung eines der spielbehafteten Teile und dem Durchlauf einer Durchlaufgebereinrichtung des anderen der spielbehafteten Teile kann mit einem Referenzwert verglichen werden. Der Referenzwert kann von der Drehzahl der Tretwelle abhängen. Der Referenzwert kann auch ein Zeitabstand zwischen Durchläufen von zwei Durchlaufgebereinrichtungen sein, von denen wenigstens eine eine andere ist als die die Durchlaufgebereinrichtungen, mit denen der zu vergleichende Zeitabstand erzeugt wurde. Alternativ kann der genannte Zeitabstand zwischen den Durchläufen mit vor dem Vergleich mit einem Referenzwert mit der Drehzahl der Tretwelle skaliert werden. Denkbar ist auch, den Zeitabstand zwischen den Durchläufen zweier Durchlaufgebereinrichtungen an verschiedenen der beiden spielbehafteten Teile zu speichern und zu einem späteren Zeitpunkt mit weiteren erfassten Zeitdifferenzen zu vergleichen. Auf diese Weise kann eine Veränderung der die Stellung der spielbehafteten Teile zueinander verfolgt werden. Alternativ zur Erfassung des Zeitabstands wird bei einer Erfassung eines Winkelabstands der Drehwinkel der Tretwelle oder des Antriebsrads bei einem Durchlauf einer Durchlaufgebereinrichtung erfasst. Dies kann z.B. mittels einer Winkelmesseinrichtung unter Zusammenwirken mit der Erfassungseinrichtung erfolgen. Die Erfassungseinrichtung kann beispielsweise magnetisch, kapazitiv, optisch oder akustisch arbeiten oder weitere geeignete Erfassungsmethoden einsetzen. Die Wirkrichtung der Messeinrichtung kann axial oder radial zu der Tretwelle ausgerichtet sein, oder in einem Winkelbereich dazwischen liegen. Die Durchlaufgebereinrichtungen sind so an oder in ihrem spielbehafteten Teil angeordnet, dass sie mit der Erfassungseinrichtung zusammenwirken.

In einer weiteren Ausführungsform des Antriebssystems weist eines der spielbehafteten Teile zwei Durchlaufgebereinrichtungen auf, die in Bezug auf die Bestimmung von Zeit- oder Winkelabständen beide einer Durchlaufgebereinrichtung zugeordnet sind, die zu dem anderen spielbehafteten Teil gehört. Insbesondere sind die drei genannten Durchlaufgebereinrichtungen einander räumlich zugeordnet, und insbesondere in der Nähe voneinander angeordnet. Somit können zwei Zeitabstände zwischen den Durchläufen der beiden Durchlaufgebereinrichtungen an dem einen der beiden spielbehafteten Teile jeweils in Bezug auf den Durchlauf der Durchlaufgebereinrichtung an dem anderen der spielbehafteten Teile ermittelt werden. Bei einer Veränderung der Relativposition der spielbehafteten Teile zueinander nimmt einer dieser Zeitabstände zu, während der andere abnimmt. Dies ermöglicht eine genaue Messung und Redundanz, was das Antriebssystem sicherer und störungsunanfälliger macht. Außerdem ermöglichen die zwei Zeitabstände das Ableiten einer Information aus einem Vergleich dieser beiden Zeitabstände, die dem Vorliegen der Ruhestellung zugeordnet werden kann. Die vorstehend beschriebenen, einander zugeordneten Durchlaufgebereinrichtungen werden als ein Satz von Durchlaufgebereinrichtungen bezeichnet. Ein solcher Satz von Durchlaufgebereinrichtungen ermöglicht anhand der Differenz der Zeitabstände zwischen den Durchläufen der Durchlaufgebereinrichtungen die Ermittlung der Relativstellung der spielbehafteten Teile zueinander. Funktionsähnlich können auch Sätze von Durchlaufgebereinrichtungen sein, die jeweils nur eine Durchlaufgebereinrichtung an jedem der spielbehafteten Teile aufweist. Dann kann keine Differenzbildung von Zeitabständen innerhalb eines Satzes von Durchlaufgebereinrichtungen erfolgen, sondern nur ein Zeitabstand ausgewertet werden.

In einer weiteren Ausführungsform sind die in Bezug auf die vorstehend zuletzt beschriebene Ausführungsform genannten Zeitabstände wenigstens näherungsweise gleich groß, wenn sich die spielbehafteten Teile zueinander in der Ruhestellung befinden. Alternativ oder zugleich können ein erster Winkelabstand zwischen einer ersten der beiden Durchlaufgebereinrichtungen an einem der spielbehafteten Teile und der zugeordneten Durchlaufgebereinrichtung an dem anderen der spielbehafteten Teile sowie ein zweiter Winkelabstand zwischen der zweiten der beiden Durchlaufgebereinrichtungen des einen der spielbehafteten Teile und derselben zugeordneten Durchlaufgebereinrichtung des anderen spielbehafteten Teils in der in Ruhestellung wenigstens näherungsweise gleich groß sein. Alternativ oder zusätzlich kann die Ruhestellung in eine Mittenstellung im Spiel zwischen den spielbehafteten Teil sein. Die genannten Merkmale sind vorteilhaft, weil das Spiel auf diese Weise in beide der denkbaren Bewegungsrichtungen innerhalb des Spiels eine gleichgroße Auslenkung ermöglicht.

In einer weiteren Ausführungsform wird vorgeschlagen, die spielbehafteten Teile mit mehr als einem Satz von Durchlaufgebereinrichtungen auszustatten. Dabei können die Winkelabstände dieser Sätze von Durchlaufgebereinrichtungen zueinander jeweils gleich groß sein. Dann ergibt sich ein gleichmäßiger Durchlauf der Sätze von Durchlaufgebereinrichtungen vor der Erfassungseinrichtung, wodurch die Drehzahl der Tretwelle in gleichmäßigen Abständen erfassbar ist. Insbesondere sind an einem der spielbehafteten Teile vier und an dem anderen der spielbehafteten Teile acht Durchlaufgebereinrichtungen vorgesehen. Der Abstand von Durchlaufgebereinrichtungen innerhalb eines Satzes von Durchlaufgebereinrichtungen ist vorzugsweise erheblich kleiner als der Abstand von zwei Sätzen von Durchlaufgebereinrichtungen. Auf diese Weise ist eine genaue Messung der Drehzahl der Tretwelle möglich, da sie auf einer größeren gemessenen Zeit zwischen Durchläufen von Durchlaufgebereinrichtungen von zwei verschiedenen Sätzen von Durchlaufgebereinrichtungen beruhen kann. Alternativ können Sätze von Durchlaufgebereinrichtungen mit kleinem Abstand zueinander ausgeführt werden, um möglichst viele dieser Sätze vorzusehen. Dann kann über einen geringen Winkelbereich der Drehung der Tretwelle die Ruhestellung, eine Zwischenstellung oder einer Anschlagstellung erfasst werden. Weiter ist denkbar, Sätze aus zwei Durchlaufgebereinrichtungen hintereinander anzuordnen, so dass sich die Durchlaufgebereinrichtungen an dem einen der spielbehafteten Teile mit Durchlaufgebereinrichtungen des anderen der spielbehafteten Teile abwechseln. Auf diese Weise kann die Anzahl der Messungen von Zeitabständen zwischen den Durchläufen von Durchlaufgebereinrichtungen von unterschiedlichen der spielbehafteten Teile maximiert werden. Auf diese Weise ist ein sehr kleiner Anteil an einer Umdrehung der Tretwelle erforderlich, um eine Relativstellung der spielbehafteten Teile zueinander zu ermitteln. Der Verlauf der Relativstellung kann durch den Vergleich von Zeitabständen von aufeinander folgenden durchlaufenden Sätzen von Durchlaufgebereinrichtungen ermittelt werden.

Besonders bevorzugt sind beide Kurbeln an der Tretwelle befestigt und übertragen pedalinduziertes Moment in diese. Insbesondere ist keine der Kurbeln mit einem Antriebsrad der Antriebsmechanik verbunden. Auf diese Weise wird das gesamte über die Pedale erzeugte Moment in die Tretwelle eingeleitet und kann am Übergang zu dem Antriebsrad mit einer Momenterfassungseinrichtung erfasst werden. Dies wird für alle Ausführungsformen bevorzugt.

In einem weiteren Aspekt der Erfindung wird ein Verfahren zur Erfassung eines Antriebszustands eines Drehzahlantriebs eines pedalbetreibbaren Fahrzeugs vorgeschlagen. Das Fahrzeug weist ein Antriebssystem auf, dass zwei spielbehaftete Teile aufweist, die innerhalb des Spiels eine Relativposition zueinander einnehmen, eine Erfassungseinrichtung für den Durchlauf von Durchlaufgebereinrichtungen, wobei an jedem der spielbehafteten Teile wenigstens eine Durchlaufgebereinrichtung angeordnet ist. Weiter weist das Antriebssystem vorzugsweise eine Ermittlungseinrichtung auf, mit der aus Signalen der Erfassungseinrichtung die Relativposition der spielbehafteten Teile ermittelt werden kann. Die Ermittlungseinrichtung kann auch extern von dem Antriebssystem ausgeführt und/oder angeordnet sein. Bei dem Verfahren ist eine Relativposition der spielbehafteten Teile mit der Erfassungseinrichtung erfassbar, indem der Zeitabstand zwischen einem Durchlauf einer Durchlaufgebereinrichtung an einem der spielbehafteten Teile und einem Durchlauf der Durchlaufgebereinrichtung des anderen der spielbehafteten Teile ermittelt wird. Die Durchlaufgebereinrichtungen laufen dabei jeweils an der Erfassungseinrichtung vorbei. Insbesondere ist erfassbar, ob sich die spielbehafteten Teile zueinander in der Ruhestellung, der Anschlagstellung oder einer Zwischenstellung befinden. Die Auslenkung in eine Zwischenstellung aus der Ruhestellung heraus hängt vorzugsweise von dem zur Messzeit induzierten Pedalmoment ab. Aus dem Zeitabstand zwischen Durchlaufgebereinrichtungen an einem der beiden spielbehafteten Teile kann die Drehzahl der Tretwelle bzw. Trittfrequenz erfasst werden. Erst nachdem die zu einem Satz von Durchlaufgebereinrichtungen gehörigen Durchlaufgebereinrichtungen an der Erfassungseinrichtung vorbeigelaufen sind, kann eine Relativstellung der spielbehafteten Teile zueinander für diesen Zeitraum ermittelt werden. Ein ermittelter Zeitabstand oder eine Differenz von Zeitabständen kann mit einem Schwellenwert verglichen werden, um festzustellen, ob sich die spielbehafteten Teile in der Ruhestellung befinden oder daraus ausgelenkt sind.

Nach dem erfindungsgemässen Verfahren gibt der Antriebsmotor keine Antriebsleistung ab, wenn die Ermittlung der Relativposition der spielbehafteten Teile ergibt, dass sich diese in der Ruhestellung befinden. Dabei wird insbesondere der Motorstrom des Antriebsmotors ausgeschaltet. Durch verbleibende Rotationsenergie oder möglicherweise Magneteffekte in dem Antriebsmotor kann dennoch in gewissem Umfang Antriebsenergie von dem Antriebsmotor abgegeben oder aufgenommen werden, was definitionsgemäß nicht unter die Abgabe von Antriebsleistung im Sinne dieser Ausführungsform fallen soll.

In einer weiteren Ausführungsform des Verfahrens wird eines der vorstehend beschriebenen Verfahren im Verlauf einer Umdrehung der Tretwelle mehrfach ausgeführt. Auf diese Weise kann der Verlauf des pedalinduzierten Moments über eine Tretwellenumdrehung erfasst werden. Dies ist umso feiner möglich, je mehr Sätze von Durchlaufgebereinrichtungen an den spielbehafteten Teilen angeordnet sind. Wenn die Rückstelleinrichtung einen linearen Zusammenhang zwischen der Auslenkung aus der Ruhestellung und dem pedalinduzierten Moment in der Tretwelle bewirkt, kann aus der Relativstellung der spielbehafteten Teile auf das pedalinduzierte Moment linear zurückgeschlossen werden. Dazu ist insbesondere die Bewegung in dem Spiel reibungsarm, d.h., die Reibungskräfte bzw. -momente sind vergleichsweise gering zu den Rückstellkräften bzw. -momenten. Vorzugsweise wird über eine Umdrehung der Tretwelle wenigstens näherungsweise eine Sinusfunktion gemessen, die von der Geometrie des Kurbeltriebs in Verbindung mit den Pedalkräften des Fahrers erzeugt wird. Dadurch kann in einer Variante die Gleichmäßigkeit des Tretens beurteilt, maximale bzw. minimale Triebkräfte ermittelt werden und dergleichen mehr.

### Zeichnungen

Nachfolgend werden bevorzugte Ausführungsbeispiele der Erfindung unter Bezugnahme auf die begleitenden Zeichnungen im Detail beschrieben. In den Zeichnungen ist:
- Figur 1: eine schematische Ansicht eines Elektrofahrrads in einer Ausführungsform der Erfindung,
- Figur 2: eine schematische Darstellung einer Tretwelle und eines Teils eines Kettenrads des Elektrofahrrads,
- Figur 3: eine schematische Darstellung von Durchläufen von Durchlaufgebereinrichtungen vor einer Erfassungseinrichtung,
- Figur 4: eine schematische Darstellung der Wirkungsweise einer Rückstelleinrichtung,
- Figur 5: eine schematische Darstellung der Ausführungsform des Antriebssystems und deren Zusammenbau in einer ersten Variante
- Figur 6: eine schematische Darstellung der ersten Variante der Ausführungsform in einer Ruhestellung,
- Figur 7: eine schematische Darstellung der ersten Variante der Ausführungsform in einer Anschlagstellung,
- Figur 8: eine schematische Darstellung einer zweiten Variante der Ausführungsform in einer Ruhestellung, und
- Figur 9: eine schematische Darstellung der zweiten Variante der Ausführungsform in einer Anschlagstellung.

### Bevorzugte Ausführungsform der Erfindung

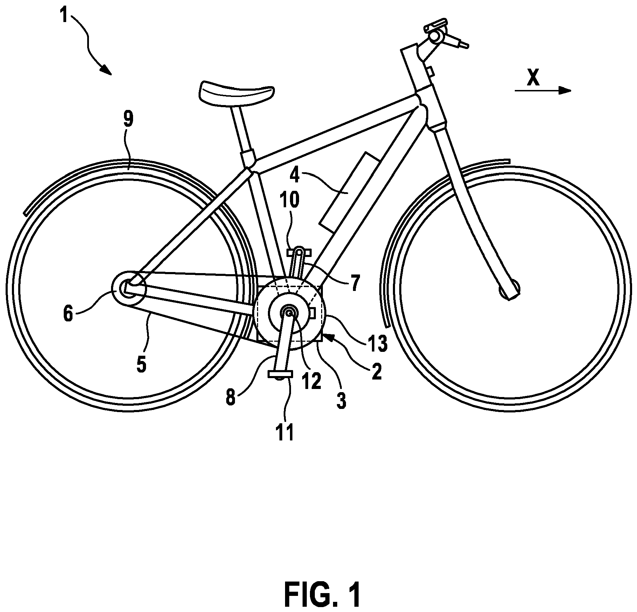

Nachfolgend wird unter Bezugnahme auf die Figur 1 ein Elektrofahrrad 1 gemäß einer Ausführungsform der Erfindung im Detail beschrieben. Das Elektrofahrrad 1 umfasst einen Kurbeltrieb 2 und einen elektrischen Antriebsmotor 3, welcher im Bereich des Kurbeltriebs 2 angeordnet ist. Der Kurbeltrieb 2 umfasst zwei Kurbeln 7 und 8, zwei Pedale 10 und 11, die an den Kurbeln befestigt sind, eine Tretwelle 12, an der die Kurbeln 7 und 8 befestigt sind, und ein Kettenrad 13, das an der Tretwelle 12 befestigt ist und mit dieser umläuft. Eine Antriebsmechanik umfasst ebenfalls das Kettenrad 13, eine Kette 5 und wenigstens ein Ritzel 6, welches an einem Hinterrad 9 angeordnet ist. Der elektrische Antrieb 3 wird von einer Batterie 4 mit Strom versorgt. Der elektrische Antrieb 3 umfasst einen Antriebsmotor.

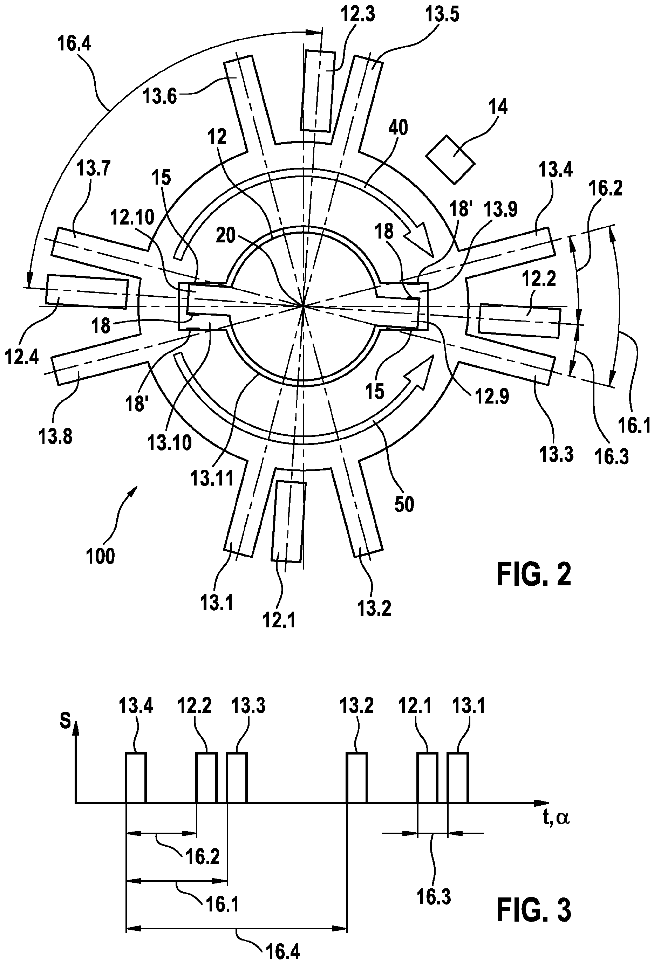

Figur 2 zeigt schematisch eine Momentenerfassungseinrichtung 100 des erfindungsgemäßen Antriebssystems. Die Momenterfassungseinrichtung 100 umfasst die Tretwelle 12, welche zwei Vorsprünge 12.9 und 12.10 an ihrem äußeren Umfang trägt. Weiter umfasst die Momentenerfassungseinrichtung 100 das Kettenrad 13, welches eine Aussparung 13.11 aufweist, in welcher die Tretwelle 12 eingesetzt ist. Dabei sind die Vorsprünge 12.9 und 12.10 der Tretwelle 12 in Aussparungsabschnitten 13.9 und 13.10 am Rand der Aussparung 13.11 angeordnet. Oberflächenabschnitte der Tretwelle 12 und der Aussparung 13.4 des Kettenrades 13, die nicht Teil der Vorsprünge 12.9 und 12.10 bzw. der Aussparungsabschnitte 13.9 und 13.10 sind, haben vorzugsweise jeweils einen kreisrunden Querschnitt. Der Durchmesser des kreisrunden Querschnitts an der Tretwelle 12 bzw. der Aussparung 13.11 des Kettenrads weichen nicht stark voneinander ab. Vorzugsweise weisen das Kettenrad 13 und die Tretwelle 12 eine zueinander reibungs- und/oder verschleißarme Werkstoffpaarung auf.

Das Kettenrad 13 weist acht Durchlaufgebereinrichtungen 13.1 bis 13.8 auf. Mit der Tretwelle 12 sind verdrehfest vier Durchlaufgebereinrichtungen 12.1 bis 12.4 verbunden. Diese befinden sich radial in zumindest ähnlicher Position wie die Durchlaufgebereinrichtungen 13.1 bis 13.8 des Kettenrads 13. Jeweils eine der Durchlaufgebereinrichtungen 12.1 bis 12.4 und zwei Durchlaufgebereinrichtungen 13.1 bis 13.8 bilden zusammen einen Satz von Durchlaufgebereinrichtungen, die räumlich in der Nähe voneinander angeordnet sind. Dabei umgeben jeweils zwei der Durchlaufgebereinrichtungen 13.1 bis 13.8 des Kettenrads 13 jeweils eine der Durchlaufgebereinrichtungen 12.1 bis 12.4 der Tretwelle 12 in Umfangsrichtung der Tretwelle 12 bzw. des Kettenrads 13.

Weiter weist die Momentenerfassungseinrichtung 100 einer Erfassungseinrichtung 14 auf, mit der ein Durchlauf bzw. ein Vorbeistreichen einer Durchlaufgebereinrichtung 12.1 bis 12.4 bzw. 13.1 bis 13.8 an der Erfassungseinrichtung 14 erfassbar ist. Während die Tretwelle 12 und das Kettenrad 13 miteinander umlaufen, steht die Erfassungseinrichtung 14 fest und ist zum Beispiel an einem Rahmen des Elektrofahrrads befestigt. Innerhalb eines Satzes von Durchlaufgebereinrichtungen 12.1 bis 12.4 bzw. 13.1bis 13.8 weisen die Durchlaufgebereinrichtungen 12.1 bis 12.4 der Tretwelle 12 jeweils einen ersten Winkelabstand 16.2 zu einer ersten der Durchlaufgebereinrichtungen 13.1, 13.3, 13.5 und 13.7 und jeweils einen zweiten Winkelabstand und 16.3 zu einer zweiten der Drehwinkelgebereinrichtungen 13.2, 13.4, 13.6 und 13.8 auf. Die Summe der Winkelabstände 16.2 und 16.3 entspricht in jedem der Sätze von Drehwinkelgebereinrichtungen 12.1 bis 12.4 und 13.1 bis 13.8 jeweils einem Winkelabstand zwischen den Paaren der Drehwinkelgebereinrichtungen 13.1 und 13.2, 13. 3 und 13.4, 13.5 und 13.6 sowie 13. 7 und 13.8 der Sätze von Drehwinkelgebereinrichtungen 12.1 bis 12.4 und 13.1 bis 13.8. Anhand eines Verhältnisses oder einer Differenz der Winkelabstände 16.2 und 16.3 lässt sich ableiten, in welcher Relativstellung sich die spielbehafteten Teile Tretwelle 12 und Kettenrad 13 zueinander befinden, insbesondere, ob sie sich in der Ruhestellung oder in einer Anschlagstellung befinden.

Die spielbehafteten Teile befinden sich in der Figur 2 in einer Anschlagstellung. Die Tretwelle 12 übt ein Drehmoment 50 auf das Kettenrad 13 aus, so dass sich die Vorsprünge 12.9 und 12.10 in den Aussparungsabschnitten 13.9 und 13.10 jeweils an Anschlagbereichen 15 berühren. An diesen Stellen wird das Drehmoment der Tretwelle 12 an das Kettenrad 13 übertragen. Die Tretwelle 12 und das Kettenrad 13 befinden sich somit in einer Anschlagstellung. Dadurch ist der Winkelabstand 16.3 kleiner als der Winkelabstand 16.2.

Dem Drehmoment 50 wirkt ein Drehmoment 40 aus einer nicht dargestellten Rückstelleinrichtung entgegen. Hört der Fahrer auf zu treten, so verschwindet das Drehmoment 50 und das Rückstellmoment 40 bewirkt, dass sich die Tretwelle 12 und das Kettenrad 13 relativ zueinander in die Ruhestellung begeben. In der Ruhestellung liegen die den Anschlagbereichen 15 gegenüberliegenden Berührungsbereiche 18 der Vorsprünge 12.9 und 12.10 innen an den Berührungsbereichen 18' der Aussparungsabschnitte 13.9 und 13.10 der Aussparung 13.11 des Kettenrads 13 an. In Figur 2 wäre die Tretwelle 12 im Vergleich zu der dargestellten Anschlagstellung in der Ruhestellung bis zum entgegengesetzten Anschlag des Spiels gegen den Uhrzeigersinn verdreht. Dann wäre der Winkelabstand 16. 2 kleiner als der Winkelabstand 16.3, wodurch die Ruhestellung von der Anschlagstellung unterschieden werden könnte.

In Figur 3 ist schematisch ein Signal der Erfassungseinrichtung 14 dargestellt, das einen Signalverlauf S zeigt, während dem zwei Sätze von Durchlaufgebereinrichtungen 12.1 bis 12.4 und 13.1 bis 13.8 an der Erfassungseinrichtung 14 vorbeilaufen. Der Signalverlauf S ist über der Zeit t oder dem Drehwinkel α der Tretwelle 12 bzw. des Kettenrads 13 abgetragen. Den Signalspitzen sind die Bezugsziffern der zugehörigen Durchlaufgebereinrichtungen 12.1, 12.2 und 13.1 bis 13.4 zugeordnet. Der dargestellte Signalverlauf würde sich an der Erfassungseinrichtung 14 ergeben, wenn sich die Tretwelle 12 und das Kettenrad 13 in der in Figur 2 gezeigten Situation um eine halbe Umdrehung gegen den Uhrzeigersinn drehen würden. Die Zeit- bzw. Winkelabstände zwischen den Signalspitzen entsprechen den Winkelabständen 16.1 bis 16.4. Mit dem Abstand 16.1 kann im Vergleich zu dem Abstand 16. 3 ermittelt werden, ob sich die Tretwelle 12 und das Kettenrad 13 in der Ruhestellung oder in der Anschlagstellung befinden. Mittels des Zeit- oder Winkelabstands 16.4 kann die Drehzahl der Tretwelle bzw. die Trittfrequenz ermittelt werden. Der Winkelabstand 16.4 in der Figur 3 ist den Abständen der zwei Durchlaufgebereinrichtungen 13.2 und 13. 4 des Kettenrads 13 zugeordnet, wobei derselbe Abstand 16.4 in Figur 2 z.B. auch zwischen den zwei Durchlaufgebereinrichtungen 12.3 und 12.4 der Tretwelle auftritt. Der Zeit- bzw. Winkelabstand 16.4 findet sich auch zwischen Signalen wieder, die innerhalb eines Satzes von Durchlaufgebereinrichtungen 12.1 bis 12.4 und 13.4 bis 13.8 dieselbe Position innehaben.

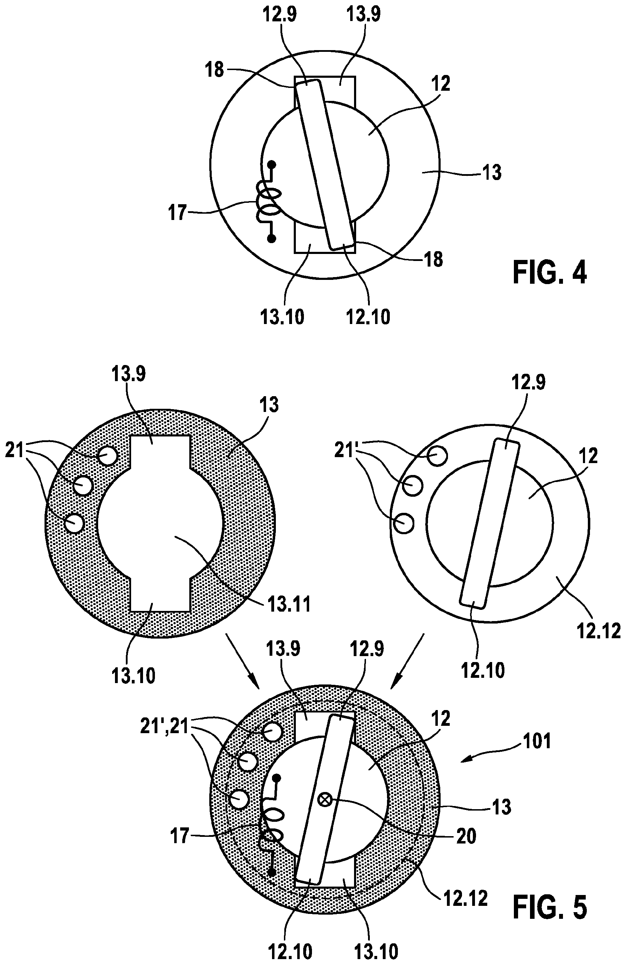

Figur 4 zeigt schematisch die Wirkungsweise einer Rückstelleinrichtung, die mit einer Feder 17 realisiert ist, welche an der Tretwelle 12 und an dem Kettenrad 13 derart befestigt ist, dass sie die Tretwelle 12 und das Kettenrad 13 in einer Ruhestellung bewegt. In der Ruhestellung liegen die Vorsprünge 12.9 und 12.10 an jeweils an einer Berührungsstelle 18 im inneren des Aussparungsabschnitts 13.9 bzw. 13.10 an. Die Ruhestellung ist eine Endstellung in dem Spiel zwischen der Tretwelle 12 und dem Kettenrad 13. Wirkt ein Pedalmoment auf die Tretwelle 12 ein, so wird die Feder 17 ausgelenkt und die Vorsprünge 12.9 und 12.10 von den Berührungsstellen 18 entfernt. Je nach Stärke der Feder 17 in Bezug auf die Pedalkräfte kann entweder schon bei relativ geringen Pedalkräften die Anschlagstellung erreicht werden, die sich am andere Ende des Spiels zwischen der Tretwelle 12 und dem Kettenrad 13 befindet, oder sie kann so ausgelegt sein, dass die Auslenkung aus der Ruhestellung über einen größeren Bereich der möglichen Pedalmomente zu einer möglichst proportionalen Auslenkung aus der Ruhestellung führt, ohne schon bei geringen Pedalmomenten die Anschlagstellung zu erreichen.

Figur 5 zeigt schematisch eine Variante der Momentenerfassungseinrichtung 101, die auf optischer Basis arbeitet. Die Durchlaufgebereinrichtungen der Tretwelle 12 und des Kettenrads 13 sind jeweils als Aussparungen 21, 21' realisiert. Die Aussparungen 21, 21' sind in der in Figur 5 gezeigten Ausführungsform als kreisrunde Löcher ausgestaltet; in anderen Ausführungsform sind jedoch Aussparungen mit anderer Form denkbar. Insbesondere müssen die Aussparungen keine allseitig geschlossenen Löcher sein, sondern können sich auch am Rand eines Bauelements befinden. In dem in Figur 5 gezeigten Ausführungsbeispiel sind die Aussparungen 21 in das Kettenrad 13 eingebracht. Die Tretwelle 12 umfasst eine Scheibe 12.12, die die Tretwelle in radialer Richtung umgibt und die drei als kreisrunde Löcher ausgeführte Aussparungen 21' aufweist. Die Aussparungen 21' verlaufen in axialer Richtung der Tretwelle 12. Ebenso verlaufen die Aussparungen 21 in dem Kettenrad 13 in axialer Richtung. In Figur 5 ist gezeigt, wie die Tretwelle 12 und das Kettenrad 13 zu einem Verbund zusammengesetzt werden, der unten in der Figur 5 dargestellt ist. Die Vorsprünge 12.9 und 12.10 der Tretwelle 12 werden dabei in die Aussparungsabschnitte 13.9 und 13.10 eingesetzt. Zusätzlich ist in dem Verbund eine Rückstellfeder 17 wie in Bezug auf Figur 4 diskutiert angeordnet. Die Aussparungen 21, 21' der Tretwelle 12 und des Kettenrads 13 weisen zumindest im Wesentlichen denselben radialen Abstand zu einer theoretischen Drehachse 20 der Tretwelle 12 auf. Die Aussparungen 21, 21' können sich somit überdecken, so dass Licht durch die einander überdeckenden Aussparungen fallen kann. In einer nicht dargestellten Variante können weitere Aussparungen 21, 21' über wenigstens näherungsweise den gesamten Umfang von Tretwelle 12 und Kettenrad 13 angeordnet sein. Die Aussparungen 21, 21' der Tretwelle 12 haben vorzugsweise dieselbe Form wie die Aussparung 21 des Kettenrads 13.

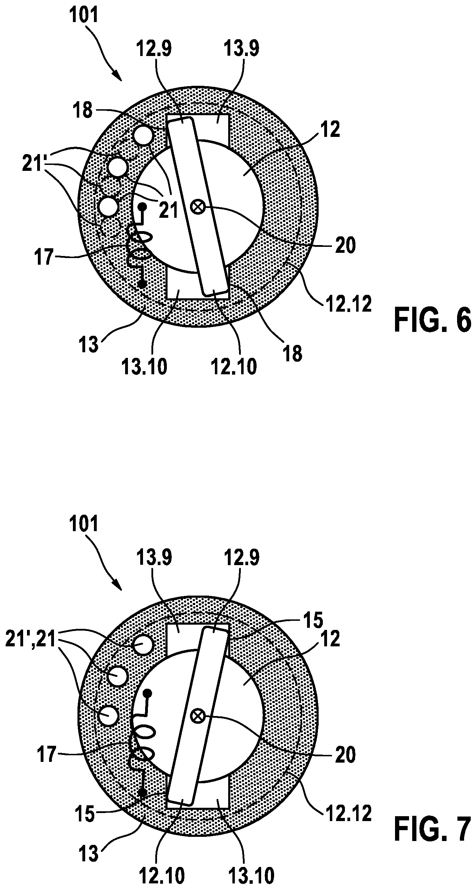

Figur 6 zeigt den Verbund aus Figur 5 in der Ruhestellung der mit Rotationsspiel behafteten Teile, in der die Vorsprünge 12.9 und 12.10 jeweils an einer Berührungsstelle 18 an die Innenkontur der Aussparungsabschnitts 13.9 und 13.10 angelegt sind. Die Ruhestellung ist eine Endposition des Spiels zwischen Tretwelle 12 und Kettenrad 13. Die Aussparungen 21, 21' der Tretwelle 12 und des Kettenrads 13 überdecken einander nicht, so dass bei dem Radius um die theoretische Drehachse 20 der Tretwelle 12, bei dem sich die Aussparungen 21' befinden, kein Licht durch die Tretwelle 12 und das Kettenrad 13 dringen kann. Dies kann mittels einer nicht dargestellten Erfassungseinrichtung 14 erfasst werden, welche auf dem Radius der Aussparungen 21' um die theoretische Drehachse 20 der Tretwelle 12 angeordnet ist. Die Erfassungseinrichtung 14 kann Licht erfassen und vorzugsweise Licht aussenden. Wenn die Erfassungseinrichtung 14 erkennt, dass kein Licht durch die Tretwelle 12 und das Kettenrad 13 dringen kann, kann darauf geschlossen werden, dass sich das die Tretwelle 12 und das Kettenrad 13 zueinander in der Ruhestellung befinden. Die Zuordnung zwischen der Ruhestellung und einer bestimmten optischen Konstellation der Aussparungen kann auch anders festgelegt werden, indem die Positionen der Aussparungen in Umfangsrichtung geändert werden.

Figur 7 zeigt schematisch den Verbund aus Figur 5 in einer Anschlagstellung der Tretwelle 12 in Bezug auf das Kettenrad 13, die mit Rotationsspiel zueinander behaftet sind. In dieser Endstellung des Rotationsspiels liegen die Vorsprünge 12.9 und 12.10 an Anschlagstellen 15 an der Innenkontur der Aussparungsabschnitte 13.9 und 13.10 an. Die Aussparungen 21 der Tretwelle 12 und des Kettenrads 13 überdecken einander, so dass an der Stelle der Aussparungen 21, 21' Licht durch die Tretwelle 12 und das Kettenrad 13 treten kann. Erfasst eine Erfassungseinrichtung 14, dass Licht durch die Aussparungen 21, 21' hindurchtreten kann, so kann auf die Anschlagstellung der spielbehafteten Teile zueinander geschlossen werden. Ein solches Erfassen bzw. Schließen kann bei jedem Durchlauf einer Aussparung 21, 21' vor der Erfassungseinrichtung 14 durchgeführt werden. Die Anordnung einer Vielzahl von Aussparungen 21, 21' entlang des Umfangs von Tretwelle 12 bzw. Kettenrad 13 ermöglicht eine häufige Erfassung und somit eine schnellere Erkennung von Änderungen der Relativstellung der spielbehafteten Teile. Der Abstand zwischen den Aussparungen 21, 21' in radialer Richtung ist vorzugsweise mindestens so groß wie die Ausdehnung der Aussparungen 21, 21' in Umfangsrichtung. Vorzugsweise kann mit der Erfassungsrichtung 14 auch eine teilweise Überdeckung der Aussparungen 21, 21' der Tretwelle 12 und des Kettenrads 13 erfasst werden. Dann können auch Zwischenstellungen zwischen der Ruhestellung und der Anschlagstellung erfasst werden.

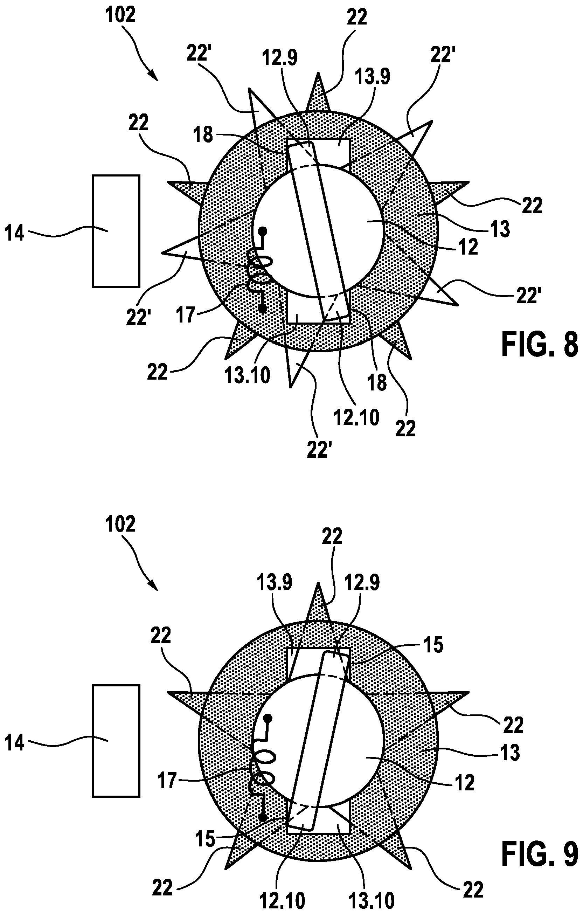

Figur 8 zeigt schematisch eine zweite Variante der Momentenerfassungseinrichtung 102. Die Erfassung der Relativstellung der spielbehafteten Teile erfolgt magnetisch mittels einer magnetischen Erfassungseinrichtung 14. Die Durchlaufgebereinrichtungen 22, 22' sind als magnetisch wirksame Vorsprünge (sternförmige Zacken) an der Tretwelle 12 und den Kettenrad 13 ausgebildet. In der Figur 18 ist die Momentenerfassungseinrichtung 102 in der Ruhestellung. Die Geometrie von Tretwelle 12 und Kettenrad 13, die das Spiel ermöglicht, entspricht der in den Figuren 5 bis 7 gezeigten Geometrie und wird nicht noch einmal gesondert beschrieben. Gleiche Merkmale tragen die gleichen Bezugszeichen. In der Ruhestellung haben die Durchlaufgebereinrichtungen 22' der Tretwelle 12 eine andere Winkelposition als die Durchlaufgebereinrichtungen 22 des Kettenrads 13. Diese laufen somit nacheinander an der Erfassungseinrichtung 14 vorbei. Es entstehen zwei Signale, die zeitlich oder in Bezug auf den Drehwinkel der Tretwelle 12 aufeinander folgen.

Figur 9 zeigt die Momentenerfassungseinrichtung 102 aus Figur 8 in der Anschlagstellung. In der Anschlagstellung überlagern sich die Durchlaufgebereinrichtungen 22, 22' der Tretwelle 12 und des Kettenrads 13, so dass sie gemeinsam vor der Erfassungseinrichtung 14 vorbeistreichen und als gemeinsames Signal erfasst werden. Aus der Information, ob ein einzelnes, überlagertes Signal oder zwei Einzelsignale mit zeitlichem bzw. winkelmäßigem Abstand erfasst werden, kann abgeleitet werden, ob sich die spielbehafteten Teile in der Ruhestellung oder in der Anschlagstellung befinden. Über den zeitlichen bzw. winkelmäßigen Abstand von einem Signal von der Tretwelle 12 zu einem Signal von dem Kettenrad 13 kann eine Zwischenstellung zwischen der Ruhestellung und der Anschlagstellung erkannt werden. Für die Durchlaufgebereinrichtungen 22 der Tretwelle 12 und des Kettenrads 13 können in einer Variante zwei separate Erfassungseinrichtungen vorgesehen sein.

## Patentansprüche

1. Antriebssystem für ein pedalbetreibbares Fahrzeug (1)
- mit einem Antriebsmotor (3), mit dem eine Antriebskraft für das Fahrzeug (1) erzeugbar ist, Pedalen (10, 11) an Pedalarmen (7, 8), einer Tretwelle (12), an der die Pedalarme (7, 8) befestigt sind, und einer Antriebsmechanik zur Übertragung von Antriebsenergie von der Tretwelle (12) zu einem Rad (9) des Fahrzeugs,
- wobei in einem Übertragungspfad von Antriebsenergie zwischen einem Pedalarm (7, 8) und einem mit der Tretwelle (12) umlaufenden Antriebsrad (13) der Antriebsmechanik ein Spiel vorhanden ist,
- wobei das Antriebssystem eine Rückstelleinrichtung (17) umfasst, mit der die spielbehafteten Teile Tretwelle 12 und Antriebsrad 13 bei oder unterhalb einer Ruhepedalkraft innerhalb ihres Spiels zueinander in eine Ruhestellung bringbar sind, in der die spielbehafteten Teile wenigstens näherungsweise eine vorgegebene Relativposition zueinander einnehmen,
- wobei mittels Pedalkraft oberhalb der Ruhepedalkraft gegen die Wirkung der Rückstelleinrichtung (17) die spielbehafteten Teile innerhalb des Spiels aus der Ruhestellung entfembar sind, und
- wobei eine Information darüber, ob die spielbehafteten Teile in Ruhestellung sind, in Form eines oder mehrerer elektrischer Signale bereitstellbar ist,
- wobei der Antriebsmotor (3) keine Antriebsenergie für das Fahrzeug abgibt, wenn die spielbehafteten Teile (12, 13) in Ruhestellung sind, **dadurch gekennzeichnet, dass**
- die zueinander spielbehafteten Teile (12, 13) oberhalb einer Anschlagpedalkraft in Bezug aufeinander in eine Anschlagstellung bringbar sind, in der sich die spielbehafteten Teile (12, 13) an jeweiligen Anschlagbereichen (15) berühren,
- wobei eine Information darüber, ob die spielbehafteten Teile (12, 13) in der Anschlagsstellung sind, in Form eines oder mehrerer elektrischer Signale bereitstellbar ist,
- wobei die Information darüber, ob die spielbehafteten Teile (12, 13) in der Anschlagsstellung sind, genutzt wird, um zu bewirken, dass bei Vorliegen der Anschlagstellung der Antriebsmotor Antriebsenergie zur Verfügung stellt.

2. Antriebssystem nach Anspruch 1, **dadurch gekennzeichnet, dass** der Antriebsmotor spätestens nach einer halben Umdrehung der Tretwelle (12) nach Eintritt der Ruhestellung keine Antriebsenergie mehr abgibt.

3. Antriebssystem nach einem der vorangehenden Ansprüche, **dadurch gekennzeichnet, dass** die Erkennung der Ruhestellung oder der Anschlagstellung oder einer Zwischenstellung zwischen der Ruhestellung und der Anschlagstellung während des Umlaufens der Tretwelle (12) mittels einer nicht mit der Tretwelle (12) umlaufenden Erfassungseinrichtung (14) erfassbar ist, indem ein Durchlaufzeitpunkt einer Durchlaufgebereinrichtung jedes der spielbehafteten Teile (12, 13) mit der Erfassungseinrichtung (14) erfassbar ist.

4. Antriebssystem nach Anspruch 3, **dadurch gekennzeichnet, dass** eines der spielbehafteten Teile (12, 13) zwei Durchlaufgebereinrichtungen (12.1 bis 12.4, 13.1 bis 13.8) aufweist, die beide räumlich einer Durchlaufgebereinrichtung (12.1 bis 12.4, 13.1 bis 13.8) des anderen spielbehafteten Teils (12, 13) zugeordnet sind.

5. Antriebssystem nach Anspruch 4, **dadurch gekennzeichnet, dass** in der Ruhestellung
- ein auf die Drehachse (20) der Tretwelle (12) bezogener Winkelabstand um die Tretwelle (12) zwischen einer der beiden Durchlaufgebereinrichtungen (13.1 bis 13.8) eines der spielbehafteten Teile (12, 13) und der Durchlaufgebereinrichtung (12.1 bis 12.4) des anderen spielbehafteten Teils (12, 13) sowie
- ein auf die Drehachse (20) der Tretwelle (12) bezogener Winkelabstand zwischen der anderen der beiden Durchlaufgebereinrichtungen (13.1 bis 13.8) des einen der spielbehafteten Teile (12, 13) und derselben Durchlaufgebereinrichtung (12.1 bis 12.4) des anderen spielbehafteten Teils (12, 13) wenigstens näherungsweise gleich groß sind.

6. Antriebssystem nach einer der Ansprüche 3 bis 5, **dadurch gekennzeichnet, dass** die spielbehafteten Teile (12, 13) mehr als einen Satz von Durchlaufgebereinrichtungen (12.1 bis 12.4, 13.1 bis 13.8), die zur Erfassung der der Ruhestellung oder der Anschlagstellung oder einer Zwischenstellung der spielbehafteten Teile eingerichtet sind, aufweisen, wobei die Winkelabstände von Sätzen von Durchlaufgebereinrichtungen (12.1 bis 12.4, 13.1 bis 13.8) zueinander auf die Drehachse (20) der Tretwelle (12) bezogen insbesondere gleich groß sind.

7. Verfahren zur Erfassung eines auf einen Pedalantrieb bezogenen Antriebszustands eines pedalbetreibbaren Fahrzeugs (1) mit einem Antriebssystem nach einem der Ansprüche 1 bis 6, bei dem eine Relativposition von spielbehafteten Teilen (12, 13) mit einer Erfassungseinrichtung (14) erfassbar ist, indem der Zeitabstand zwischen einem Durchlaufzeitpunkt einer Durchlaufgebereinrichtung (12.1 bis 12.4 bzw. 13.1 bis 13.8) des einen der spielbehafteten Teile (12 bzw. 13) an der Erfassungseinrichtung (14) und einem Durchlaufzeitpunkt einer Durchlaufgebereinrichtung (12.1 bis 12.4 bzw. 13.1 bis 13.8) des anderen der spielbehafteten Teile (12 bzw. 13) an der Erfassungseinrichtung (14) ermittelt wird, **dadurch gekennzeichnet, dass** der Antriebsmotor wenigstens näherungsweise keine Antriebsleistung abgibt, wenn ermittelt wird, dass sich die spielbehafteten Teile (12, 13) zueinander in der Ruhestellung befinden.

8. Verfahren nach Anspruch 7, **dadurch gekennzeichnet, dass** in einem Tretbetrieb des Fahrzeugs (1) ein Tretmomentverlauf über wenigstens einen Teil einer Umdrehung der Tretwelle (12) erfasst wird, indem das Verfahren nach Anspruch 7 wiederholt durchgeführt wird.

## Claims

1. Drive system for a pedal-operated vehicle (1)
- having a drive motor (3) with which a driving force for the vehicle (1) can be generated, pedals (10, 11) on pedal arms (7, 8), a pedal shaft (12) to which the pedal arms (7, 8) are attached, and a drive mechanism for transmitting drive energy from the pedal shaft (12) to a wheel (9) of the vehicle,
- wherein play is present in a transmission path of drive energy between a pedal arm (7, 8) and a drive wheel (13), rotating with the pedal shaft (12), of the drive mechanism,
- wherein the drive system comprises a resetting device (17) with which the parts comprising the pedal shaft (12) and drive wheel (13) which are subject to play can be placed in a position of rest with respect to one another at or below a resting pedal force within their play, in which position of rest the parts which are subject to play at least approximately assume a predefined relative position with respect to one another,
- wherein the parts which are subject to play can be removed from the position of rest within the play by means of pedal force above the resting pedal force counter to the effect of the resetting device (17), and
- wherein information as to whether the parts which are subject to play are in the position of rest can be made available in the form of one or more electrical signals,
- wherein the drive motor (3) does not output any drive energy for the vehicle if the parts (12, 13) which are subject to play are in the position of rest, **characterized in that**
- the parts (12, 13) which are subject to play with respect to one another can be placed in a stop position above a stop pedal force with respect to one another, in which stop position the parts (12, 13) which are subject to play are in contact at respective stop regions (15),
- wherein information as to whether the parts (12, 13) which are subject to play are in the stop position can be made available in the form of one or more electrical signals,
- wherein the information as to whether the parts (12, 13) which are subject to play are in the stop position is used to cause the drive motor to make drive energy available when the stop position is present.

2. Drive system according to Claim 1, **characterized in that** the drive motor no longer outputs any drive energy at the latest after half a revolution of the pedal shaft (12) after the occurrence of the position of rest.

3. Drive system according to one of the preceding claims, **characterized in that** the detection of the position of rest or of the stop position or of an intermediate position between the position of rest and the stop position can be carried out during the rotation of the pedal shaft (12) by means of a sensing device (14) which does not rotate with the pedal shaft (12), **in that** a cycle time or cycle sensor device of each of the parts (12, 13) which are subject to play can be sensed with the sensing device (14).

4. Drive system according to Claim 3, **characterized in that** one of the parts (12, 13) which is subject to play has two cycle sensor devices (12.1 to 12.4, 13.1 to 13.8), which are both spatially assigned to a cycle sensor device (12.1 to 12.4, 13.1 to 13.8) of the other part (12, 13) which is subject to play.

5. Drive system according to Claim 4, **characterized in that** in the position of rest
- an angular interval which is related to the rotational axis (20) of the pedal shaft (12), about the pedal shaft (12) between one of the two cycle sensor devices (13.1 to 13.8) of one of the parts (12, 13) which is subject to play and the cycle sensor device (12.1 to 12.4) of the other part (12, 13) which is subject to play and
- an angular interval which is related to the rotational axis (20) of the pedal shaft (12), between the other of the two cycle sensor devices (13.1 to 13.8) of the one of the parts (12, 13) which are subject to play and the same cycle sensor device (12.1 to 12.4) of the other part (12, 13) which is subject to play, are at least approximately of equal magnitude.

6. Drive system according to one of Claims 3 to 5, **characterized in that** the parts (12, 13) which are subject to play have more than one set of cycle sensor devices (12.1 to 12.4, 13.1 to 13.8) which are configured to sense the position of rest or the stop position or an intermediate position of the parts which are subject to play, wherein the angular intervals of sets of cycle sensor devices (12.1 to 12.4, 13.1 to 13.8) relating to the rotational axis (20) of the pedal shaft (12) with respect to one another are, in particular, of equal magnitude.

7. Method for sensing a drive state, related to a pedal drive, of a pedal-operated vehicle (1) with a drive system according to one of Claims 1 to 6, in which a relative position of parts (12, 13) which are subject to play can be sensed with a sensing device (14) in that the time interval is determined between a cycle time of a cycle sensor device (12.1 to 12.4 and 13.1 to 13.8) of the one of the parts (12 and respectively 13) which are subject to play at the sensing device (14) and a cycle time of a cycle sensor device (12.1 to 12.4 and 13.1 to 13.8) of the other of the parts (12 and respectively 13) which are subject to play at the sensing device (14), **characterized in that** the drive motor outputs at least approximately no drive power if it is determined that the parts (12, 13) which are subject to play are located in the position of rest with respect to one another.

8. Method according to Claim 7, **characterized in that** in a pedalling operation of the vehicle (1) a pedalling torque profile is sensed over at least part of a rotation of the pedal shaft (12) **in that** the method according to Claim 7 is carried out repeatedly.

## Revendications

1. Système de propulsion pour un véhicule (1) pouvant être mû par des pédales
- comprenant un moteur de propulsion (3) à l'aide duquel une force motrice pour le véhicule (1) peut être générée, des pédales (10, 11) sur des bras de pédale (7, 8), un axe de pédalier (12) auquel les bras de pédale (7, 8) sont fixés et un mécanisme de propulsion servant à transmettre l'énergie motrice de l'axe de pédalier (12) à une roue (9) du véhicule,
- un jeu étant présent dans un chemin de transmission d'énergie motrice entre un bras de pédale (7, 8) et une roue motrice (13), tournant avec l'axe de pédalier (12), du mécanisme de propulsion,
- le mécanisme de propulsion comportant un dispositif de rappel (17) à l'aide duquel les pièces présentant un jeu, à savoir l'axe de pédalier 12 et la roue motrice 13, peuvent être amenées à une position de repos dans les limites de leur jeu réciproque pour une force de pédale de repos ou en dessous de celle-ci, position de repos dans laquelle les pièces présentant un jeu adoptent au moins approximativement une position relative prédéfinie l'une par rapport à l'autre,
- les pièces présentant un jeu pouvant être éloignées de la position de repos dans les limites du jeu au moyen d'une force de pédale supérieure à la force de pédale de repos, à l'encontre de l'action du dispositif de rappel (17), et
- une information indiquant si les pièces présentant un jeu sont à la position de repos pouvant être fournie sous la forme d'un ou plusieurs signaux électriques,
- le moteur de propulsion (3) ne fournissant aucune énergie motrice pour le véhicule lorsque les pièces (12, 13) présentant un jeu sont à la position de repos, **caractérisé en ce que**
- les pièces (12, 13) présentant un jeu réciproque peuvent être amenées à une position de butée l'une par rapport à l'autre au-dessus d'une force de pédale de butée, position de butée dans laquelle les pièces (12, 13) présentant un jeu sont en contact avec des zones de butée (15) respectives,
- une information indiquant si les pièces (12, 13) présentant un jeu sont à la position de butée pouvant être fournie sous la forme d'un ou plusieurs signaux électriques,
- l'information indiquant si les pièces (12, 13) présentant un jeu sont à la position de butée étant utilisée pour amener le moteur de propulsion à fournir de l'énergie motrice dans le cas de la position de butée.

2. Système de propulsion selon la revendication 1, **caractérisé en ce que** le moteur de propulsion ne fournit plus d'énergie motrice au plus tard après un demi-tour de l'axe de pédalier (12) après la survenue de la position de repos.

3. Système de propulsion selon l'une quelconque des revendications précédentes, **caractérisé en ce que** la détection de la position de repos ou de la position de butée ou d'une position intermédiaire entre la position de repos et la position de butée pendant la rotation de l'axe de pédalier (12) peut être détectée au moyen d'un dispositif de détection (14) ne tournant pas avec l'axe de pédalier (12), en détectant à l'aide d'un dispositif de détection (14) un instant de passage d'un dispositif indicateur de passage de chacune des pièces (12, 13) présentant un jeu.

4. Système de propulsion selon la revendication 3, **caractérisé en ce que** l'une des pièces (12, 13) présentant un jeu comprend deux dispositifs indicateurs de passage (12.1 à 12.4, 13.1 à 13.8), lesquels sont tous deux associés spatialement à un dispositif indicateur de passage (12.1 à 12.4, 13.1 à 13.8) de l'autre pièce (12, 13) présentant un jeu.

5. Système de propulsion selon la revendication 4, **caractérisé en ce qu'**à la position de repos
- un écart angulaire, par rapport à l'axe de rotation (20) de l'axe de pédalier (12), autour de l'axe de pédalier (12) entre l'un des deux dispositifs indicateurs de passage (13.1 à 13.8) de l'une des pièces (12, 13) présentant un jeu et le dispositif indicateur de passage (12.1 à 12.4) de l'autre pièce (12, 13) présentant un jeu ainsi que
- un écart angulaire, par rapport à l'axe de rotation (20) de l'axe de pédalier (12), entre l'autre des deux dispositifs indicateurs de passage (13.1 à 13.8) de l'une des pièces (12, 13) présentant un jeu et le même dispositif indicateur de passage (12.1 à 12.4) de l'autre pièce (12, 13) présentant un jeu sont aux moins approximativement égaux.

6. Système de propulsion selon l'une quelconque des revendications 3 à 5, **caractérisé en ce que** les pièces (12, 13) présentant un jeu comprennent plus d'un ensemble de dispositifs indicateurs de passage (12.1 à 12.4, 13.1 à 13.8) qui sont conçus pour détecter la position de repos ou la position de butée ou une position intermédiaire des pièces présentant un jeu, les écarts angulaires d'ensembles de dispositifs indicateurs de passage (12.1 à 12.4, 13.1 à 13.8) les uns par rapport aux autres, par rapport à l'axe de rotation (20) de l'axe de pédalier (12), étant en particuliers égaux.

7. Procédé de détection d'un état de propulsion, par rapport à un mécanisme propulseur à pédales, d'un véhicule (1) pouvant être mû par des pédales, comprenant un système de propulsion selon l'une quelconque des revendications 1 à 6, procédé selon lequel une position relative de parties (12, 13) présentant un jeu peut être détectée à l'aide d'un dispositif de détection (14), en déterminant l'intervalle de temps entre un instant de passage d'un dispositif indicateur de passage (12.1 à 12.4 ou 13.1 à 13.8) de l'une des pièces (12 ou 13) présentant un jeu au niveau du dispositif de détection (14) et un instant de passage d'un dispositif indicateur de passage (12.1 à 12.4 ou 13.1 à 13.8) de l'autre pièce (12 ou 13) présentant un jeu au niveau du dispositif de détection (14), **caractérisé en ce que** le moteur de propulsion ne fournit au moins approximativement aucune puissance de propulsion lorsqu'il a été déterminé que les pièces (12, 13) présentant un jeu se trouvent à la position de repos l'une par rapport à l'autre.

8. Procédé selon la revendication 7, **caractérisé en ce que**, lors d'un fonctionnement de pédalage du véhicule (1), une variation de couple de pédalage est détectée sur au moins une partie d'un tour de l'axe de pédalier (12) en mettant en oeuvre de manière répétée le procédé selon la revendication 7.
